# EUROPÄISCHE PATENTSCHRIFT

(11) **EP 2 730 769 B1**
(45) Veröffentlichungstag und Bekanntmachung des Hinweises auf die Patenterteilung: **11.12.2024**
(21) Anmeldenummer: 13189757.1
(22) Anmeldetag: 22.10.2013
(51) Int. Cl.: F02D 41/00, F02D 41/02, F02M 26/06

(54) **Verfahren zum Betreiben einer Brennkraftmaschine mit Hochdruck- und Niederdruck-Abgasrückführung**
Method for operating a combustion engine with high pressure and low pressure exhaust gas recovery
Procédé de fonctionnement d'un moteur à combustion interne avec recyclage des gaz d'échappement à haute pression et à basse pression

(30) Priorität: 10.11.2012 DE 102012022154
(43) Veröffentlichungstag der Anmeldung: 14.05.2014
(73) Patentinhaber: Volkswagen Aktiengesellschaft, 38440 Wolfsburg (DE)
(72) Erfinder: Pott, Dr. Ekkehard, 38518 Gifhorn (DE); Hahne, Bernd, 38126 Braunschweig (DE)

(56) Entgegenhaltungen:
- EP-A2- 1 808 591
- DE-A1- 102006 054 043
- DE-A1- 102008 043 036
- KR-B1- 101 198 811
- US-A1- 2012 312 283

## Beschreibung

Die Erfindung betrifft ein Verfahren zum Betreiben einer Brennkraftmaschine, wobei eine in einer Abgasanlage der Brennkraftmaschine angeordnete Turbine eines Abgasturboladers von Abgas aus der Brennkraftmaschine abgetrieben wird und ein von der Turbine angetriebener, in einer Verbrennungsluftanlage der Brennkraftmaschine angeordneter Verdichter des Abgasturboladers Verbrennungsluft verdichtet, wobei in einer Hochdruck-Abgasrückführungs-Schleife (HD-EGR-Schleife) Abgas stromauf der Turbine abgeleitet und mit der Verbrennungsluft stromab des Verdichters gemischt wird, wobei in einer Niederdruck-Abgasrückführungs-Schleife (ND-EGR-Schleife) Abgas stromab der Turbine abgeleitet und mit der Verbrennungsluft stromauf des Verdichters gemischt wird, wobei in der ND-EGR-Schleife das Abgas von einem Niederdruck-Abgasrückführungs-Filter (ND-EGR-Filter) gereinigt wird, wobei in Abhängigkeit von einem Betriebszustand der Brennkraftmaschine ein vorbestimmter Wert für eine Gesamtabgasrückführungsrate (Gesamt-EGR-Rate) bestimmt wird, gemäß dem Oberbegriff des Patentanspruchs 1.

Aus der DE 10 2011 080 291 A1 ist eine Brennkraftmaschine mit einer Hochdruck-Abgasrückführung (HD-AGR) und einer Niederdruck-Abgasrückführung (ND-AGR) bekannt. Hierbei wird von der Erkenntnis ausgegangen, dass ein aufgeladener Motor höhere Verbrennungs- und Austrittstemperaturen aufweisen kann als ein Saugmotor mit äquivalenter Ausgangsleistung. Solche höheren Temperaturen können die Stickstoffoxid-(NOx)-Emissionen erhöhen und eine beschleunigte Materialalterung im Motor und der zugehörigen Abgasanlage verursachen. Abgasrückführung (EGR - Exhaust Gas Recovery) ist eine Herangehensweise, um gegen diese Effekte vorzugehen. EGR-Strategien reduzieren den Sauerstoffgehalt der Ansaugluftladung durch Verdünnen mit Abgas. Wenn das verdünnte Luft-Abgas-Gemisch anstelle von gewöhnlicher Luft verwendet wird, um die Verbrennung im Motor zu unterstützen, resultieren daraus niedrigere Verbrennungs- und Austrittstemperaturen. EGR verbessert auch die Kraftstoffnutzung bei Benzinmotoren, indem Drosselverluste und Wärmeabgabe reduziert werden.

Bei einem aufgeladenen Motorsystem, das mit einem Turbolader-Kompressor und einer Turbine ausgerüstet ist, kann Abgas durch eine Hochdruck-(HD)-EGR-Schleife oder eine Niederdruck(ND)-EGR-Schleife rezirkuliert werden. Bei der HD-EGR-Schleife wird das Abgas vor der Turbine abgeleitet und mit der Ansaugluft nach dem Kompressor bzw. Verdichter gemischt. Bei der ND-EGR-Schleife wird das Abgas nach der Turbine abgeleitet und mit der Ansaugluft vor dem Kompressor bzw. Verdichter gemischt. HD- und ND-EGR-Strategien erreichen optimale Effizienz in unterschiedlichen Bereichen des Motorlast-Drehzahl-Kennfeldes. Beispielsweise ist bei aufgeladenen Benzinmotoren mit stöchiometrischen Luft-Kraftstoff-Verhältnissen HD-EGR bei Niedriglasten wünschenswert, wo das Ansaugvakuum ein großes Strömungspotential bereitstellt. ND-EGR ist bei höheren Lasten wünschenswert, wo die ND-EGR-Schleife das größere Strömungspotential bereitstellt. Verschiedene andere Kompromisse zwischen den beiden Strategien existieren ebenso, sowohl für Benzin- als auch für Dieselmotoren. Eine solche Komplementarität hat Maschinenbauingenieure dazu motiviert, redundante EGR-Systeme in Betracht zu ziehen, die sowohl eine HD-EGR-Schleife als auch eine ND-EGR-Schleife aufweisen.

In der ND-EGR-Schleife ist ein Niederdruck-EGR-Kühler angeordnet, wobei über einen vorgeschalteten Filter (ND-EGR-Filter) in der ND-EGR-Schleife Rückstände aus der Abgasanlage zurückgehalten werden, damit ein der ND-EGR-Schleife nachgeschalteter Verdichter eines Abgasturboladers (ATL-Verdichter) nicht durch diese Rückstände beschädigt wird. Der ND-EGR-Filter wird durch einen Differenzdrucksensor überwacht. Übersteigt der Druckverlust über den ND-EGR-Filter einen vorbestimmten Schwellwert, wird eine Motorbetriebsstörung angezeigt. Dies führt zu einer erhöhten Anzahl von Schadensfällen.

Um dies zu verhindern, ist bisher eine sorgfältige Fertigung der Abgasanlage und der Abgasreinigung vorgesehen, damit wenig Produktionsrückstände in die ND-EGR-Schleife gelangen. Weitere Partikelablagerungen im Betrieb über eine Laufzeit der Brennkraftmaschine lassen sich jedoch nicht vollständig verhindern.

Aus der KR 101 198 811 B1 ist ein Verbrennungsmotor mit einem Niedrigdruck-EGR-System und einem Hochdruck-EGR-System bekannt. Das Niedrigdruck-EGR-System weist auf: ein Niedrigdruck-EGR-Ventil, das in bzw. an einer Niedrigdruck-EGR-Leitung angeordnet ist, um den Betrag an rezirkuliertem Abgas einzustellen, Drucksensoren die an einer Stromabwärtsseite und an einer Stromaufwärtsseite des Niedrigdruck-EGR-Ventils angeordnet sind, um eine Druckdifferenz zwischen der Stromabwärtsseite und der Stromaufwärtsseite des Niedrigdruck-EGR-Ventils zu detektieren, und einen Steuerabschnitt, welcher die gemessene bzw. detektierte Druckdifferenz heranzieht, um die Öffnungsrate des Niedrigdruck-EGR-Ventils zu steuern. Angrenzend zum Niedrigdruck-EGR-Ventil ist ein Notfilter angeordnet. Ein Turbolader ist mit einer Abgasleitung und einer Einlassleitung verbunden. Der Turbolader weist eine Turbine auf, welche heißes und unter hohem Druck stehendes Abgas, welches in der Abgasleitung strömt, dazu verwendet, um Rotationsenergie zu erzeugen. Ein Kompressor bzw. Verdichter des Turbuladers ist mit der Turbine verbunden, um Einlassluft der Einlassleitung zu komprimieren, welche mit dem Verbrennungsmotor verbunden ist, um die (komprimierte) Einlassluft dem Motor zuzuführen. Der Steuerabschnitt kann den Rückfluss bzw. die Rückströmung des rezirkulierten Abgases verhindern durch Einstellen der Öffnungsrate des Niedrigdruck-EGR-Ventils, falls die Druckdifferenz, die von dem Drucksensor gemessen wurde, kleiner ist als ein vorbestimmter Zielwert. D. h., die Öffnungsrate des Niedrigdruck-EGR-Ventils wird reduziert, um die Druckdifferenz zwischen nach und vor dem Niedrigdruck-EGR-Ventils zu erhöhen. Ein Zurückströmen in einer Hochdruck-EGR-Leitung des Hochdruck-EGR-Systems, kann verhindert werden, indem weitere Drucksensoren an einer Stromabwärtsseite und an einer Stromaufwärtsseite eines Hochdruck-EGR-Ventils angeordnet werden, um den Hochdruck-EGR-Gas-Betrag mittels des Hochdruck-EGR-Ventils einzustellen.

Aus der EP 1 808 591 A1 ist eine Brennkraftmaschine mit einem Abgasturbolader sowie einer Niederdruck-EGR-Schleife und einer Hochdruck-EGR-Schleife bekannt. Stromabwärts einer Turbine des Abgasturboladers ist ein Filter angeordnet. Stromabwärts des Filters zweigt die ND-EGR-Leitung ab. Innerhalb der ND-EGR-Schleife ist ein Kühler angeordnet. Ein Drucksensor misst die Druckdifferenz zwischen einem Einlass und einem Auslass der Niederdruck-EGR-Schleife. Wenn die gemessene Druckdifferenz größer als ein Schwellwert ist, wird der Niederdruck-EGR-Durchfluss derart gesteuert, dass die Druckdifferenz unter den Schwellwert sinkt, wobei das restliche rückzuführende Abgas über die HD-EGR-Schleife geleitet wird.

Der Erfindung liegt die Aufgabe zugrunde, ein Verfahren der o.g. Art dahingehend zu verbessern, dass weniger Motorbetriebsstörungen aufgrund eines zugesetzten ND-EGR-Filters auftreten, die eine unerwünscht vorzeitige Wartung der Brennkraftmaschine in einer Fachwerkstatt erfordern.

Diese Aufgabe wird erfindungsgemäß durch ein Verfahren der o.g. Art mit den in Anspruch 1 gekennzeichneten Merkmalen gelöst. Vorteilhafte Ausgestaltungen der Erfindung sind in den weiteren Ansprüchen beschrieben.

Dazu ist es bei einem Verfahren der o.g. Art erfindungsgemäß vorgesehen, dass mindestens ein Betriebsparameter der Brennkraftmaschine bestimmt wird, wobei ein Anteil einer Niederdruck-Abgasrückführungsrate (ND-EGR-Rate) an der Gesamt-EGR-Rate und ein Anteil einer Hochdruck-Abgasrückführungsrate (HD-EGR-Rate) in Abhängigkeit von einem Wert des Betriebsparameters bestimmt wird.

Dies hat den Vorteil, dass für jeden Betriebszustand der Brennkraftmaschine ein optimiert emissionsneutraler Betrieb der Brennkraftmaschine gewährleistet ist.

Eine weitere Verringerung von unerwünschten Emissionen erzielt man dadurch, dass in Abhängigkeit von dem Betriebsparameter der Brennkraftmaschine der Anteil der ND-EGR-Rate an der Gesamt-EGR-Rate reduziert oder erhöht und der Anteil der HD-EGR-Rate an der Gesamt-EGR-Rate entsprechend erhöht oder reduziert wird, so dass die Gesamt-EGR-Rate den vorbestimmten Wert erreicht.

In besonders vorteilhafter Weise wird als Betriebsparameter der Brennkraftmaschine in der Abgasanlage ein Wert eines Maßes für eine Druckdifferenz, insbesondere eine Druckdifferenz zwischen einer ersten vorbestimmten Stelle stromauf des ND-EGR-Filters und einer zweiten vorbestimmten Stelle stromab des ND-EGR-Filters bestimmt, wobei ein Anteil einer Niederdruck-Abgasrückführungsrate (ND-EGR-Rate) an der Gesamt-EGR-Rate und ein Anteil einer Hochdruck-Abgasrückführungsrate (HD-EGR-Rate) in Abhängigkeit vom Wert des Maßes für die Druckdifferenz, insbesondere von der Druckdifferenz bestimmt wird.

Dies hat den Vorteil, dass eine Betriebsdauer der Brennkraftmaschine bis zu einer notwendigen Wartung in einer Fachwerkstatt aufgrund eines zugesetzten ND-EGR-Filters zeitlich verzögert bzw. aufgeschoben werden kann, wodurch sich niedrigere Betriebskosten für die Brennkraftmaschine ergeben, wobei gleichzeitig trotz dieser Verlängerung des Wartungsintervalls ein emissionsneutraler Betrieb der Brennkraftmaschine gewährleistet ist.

Eine wirksame und funktionssichere Verringerung des Wertes eines Maßes für eine Druckdifferenz, insbesondere der Druckdifferenz erzielt man dadurch, dass mit zunehmendem Wert eines Maßes für eine Druckdifferenz, insbesondere für die Druckdifferenz der Anteil der ND-EGR-Rate an der Gesamt-EGR-Rate reduziert und der Anteil der HD-EGR-Rate an der Gesamt-EGR-Rate entsprechend erhöht wird, so dass die Gesamt-EGR-Rate den vorbestimmten Wert erreicht.

Eine gezielte Verlängerung des Wartungsintervalls auf eine maximal mögliche Zeitdauer erzielt man dadurch, dass der Anteil der ND-EGR-Rate an der Gesamt-EGR-Rate derart reduziert wird, dass ein Wert für die Druckdifferenz unter einem vorbestimmten Wert bleibt, bei dem eine Betriebsstörung angezeigt wird.

Um bei einem ohnehin stattfindenden Werkstattaufenthalt eine ggf. vorhandene Notwendigkeit zum Wechsel des ND-EGR-Filters oder durchführen von filterbelagsmindernden Maßnahmen erkennen zu können, wird der Wert des Maßes für eine Druckdifferenz, insbesondere die Druckdifferenz abrufbar gespeichert.

Eine weitere Verzögerung der Anzeige einer Motorbetriebsstörung trotz zugesetztem ND-EGR-Filter um eine beliebige Zeitspanne erzielt man dadurch, dass die ND-EGR-Rate auf null gesetzt wird, wenn der vorbestimmte Wert des Maßes für eine Druckdifferenz, insbesondere für die Druckdifferenz nicht mehr um mehr als einen vorbestimmten Wert durch Reduktion der ND-EGR-Rate unterschritten werden kann.

Ein problemloses Ersetzen eines Anteils der ND-EGR-Rate durch eine entsprechende Erhöhung der HD-EGR-Rate erzielt man dadurch, dass in der HD-EGR-Schleife das rückgeführte Abgas gekühlt wird. Hierdurch ist sicher gestellt, dass die Temperatur des Gemisches aus HD-EGR und Lade- bzw. Verbrennungsluft nicht nennenswert oberhalb der Temperatur des Gemisches aus ND-EGR und Lade- bzw. Verbrennungsluft liegt.

Das erfindungsgemäße Verfahren kann in einer computerimplementierten Ausführungsform realisiert werden: Eine erfindungsgemäße Steuerungseinrichtung einer Brennkraftmaschine umfasst eine Recheneinheit und eine Speichereinheit. Erfindungsgemäß ist in der Speichereinheit ein Computerprogramm abgelegt oder gespeichert. Mittels des Computerprogramms wird bei dessen wenigstens teilweise Ausführung auf der Recheneinheit ein Verfahren zum Betreiben einer Brennkraftmaschine mit Merkmalen oder Merkmalskombinationen gemäß dieser Darstellung durchgeführt.

Die Erfindung wird im Folgenden anhand der Beschreibung einer bevorzugten Ausführungsform und Bezugnahme auf die Zeichnung näher erläutert. Diese zeigt in
- Fig. 1: eine beispielhafte Ausführungsform einer Brennkraftmaschine zum Ausführen des erfindungsgemäßen Verfahrens in einem schematischen Blockschaltbild;
- Fig. 2: eine grafische Darstellung von Abgasrückführungs-Raten gemäß dem Stand der Technik und
- Fig. 3: eine grafische Darstellung von Abgasrückführungs-Raten gemäß der vorliegenden Erfindung.

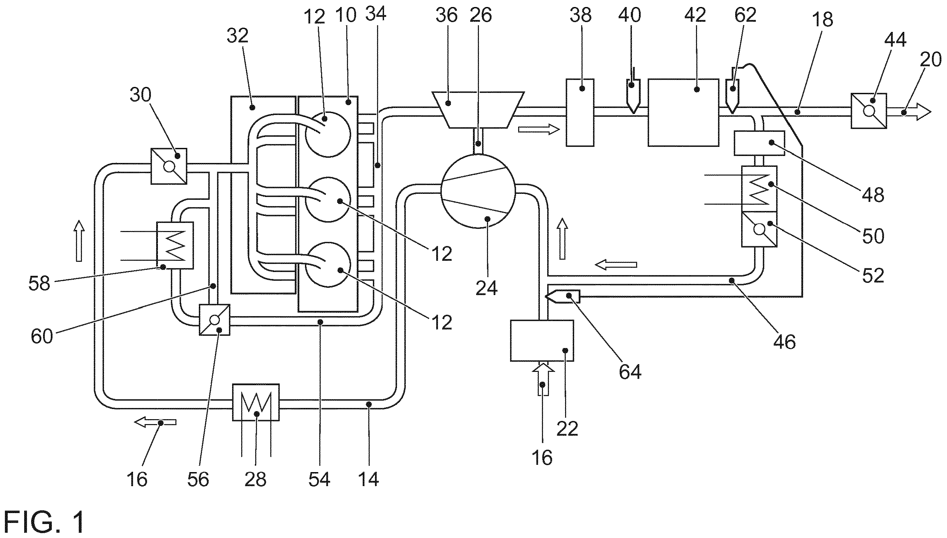

Die in Fig. 1 beispielhaft dargestellte Brennkraftmaschine umfasst einen Motorblock 10 mit Arbeitszylindern 12, eine Verbrennungsluftanlage 14 zum Zuführen von Verbrennungsluft 16 an die Arbeitszylinder 12 und eine Abgasanlage 18 zum Abführen von Abgas 20 von den Arbeitszylindern 12.

Die Verbrennungsluftanlage 14 umfasst einen Luftfilter 22, einen Verdichter 24 eines Abgasturboladers (ATL) 26, einen Ladeluftkühler 28, eine Drosselklappe 30 und ein Saugrohr 32. Die Abgasanlage 18 umfasst einen Abgaskrümmer 34, eine Turbine 36 des ATL 26, einen Katalysator 38, einen Relativdrucksensor 40, einen Partikelfilter 42, welcher insbesondere ein Dieselpartikelfilter DPF ist, und eine Abgasklappe 44.

Zur Abgasrückführung, d.h. zum Zurückleiten von Abgas 20 aus der Abgasanlage 18 in die Verbrennungsluftanlage 14 ist eine Niederdruck-Abgasrückführungs-Schleife (ND-EGR-Schleife) 46 vorgesehen. Diese ND-EGR-Schleife 46 zweigt stromab der Turbine 36 von der Abgasanlage 18 ab und mündet stromauf des Verdichters 24 in die Verbrennungsluftanlage 14. Die ND-EGR-Schleife 46 umfass einen Niederduck-Abgasrückführungs-Filter (ND-EGR-Filter) 48, einen Niederdruck-Abgasrückführungskühler (ND-EGR-Kühler) 50 und ein Niederdruck-Abgasrückführungs-Ventil (ND-EGR-Ventil) 52.

Weiterhin ist zur Abgasrückführung, d.h. zum Zurückleiten von Abgas 20 aus der Abgasanlage 18 in die Verbrennungsluftanlage 14 ist eine Hochdruck-Abgasrückführungs-Schleife (HD-EGR-Schleife) 54 vorgesehen. Diese HD-EGR-Schleife 54 zweigt vom Abgaskrümmer 34 ab und mündet stromab des Verdichters 24 in die Verbrennungsluftanlage 14. Die HD-EGR-Schleife 54 umfasst ein Hochdruck-Abgasrückführungs-Ventil (HD-EGR-Ventil) 56, einen Hochdruck-Abgasrückführungs-Kühler (HD-EGR-Kühler) 58 und eine Bypassleitung 60 für den HD-EGR-Kühler 58. Das HD-EGR-Ventil 56 hat eine Doppelfunktion, einerseits stellt es eine gewünschte Hochdruck-Abgasrückführungs-Rate (HD-EGR-Rate) ein und andererseits stellte es ein, welcher Anteil der Hochdruck-Abgasrückführung (HD-EGR) über den HD-EGR-Kühler 58 und welcher Anteil ungekühlt über die Bypassleitung 60 strömt.

Zur Bestimmung einer Druckdifferenz stromauf und stromab des ND-EGR-Filters 48 ist an einer ersten Stelle stromauf des ND-EGR-Filters 48 ein erster Drucksensor 62 und an einer zweiten Stelle stromab des ND-EGR-Filters 48 ein zweiter Drucksensor 64 vorgesehen.

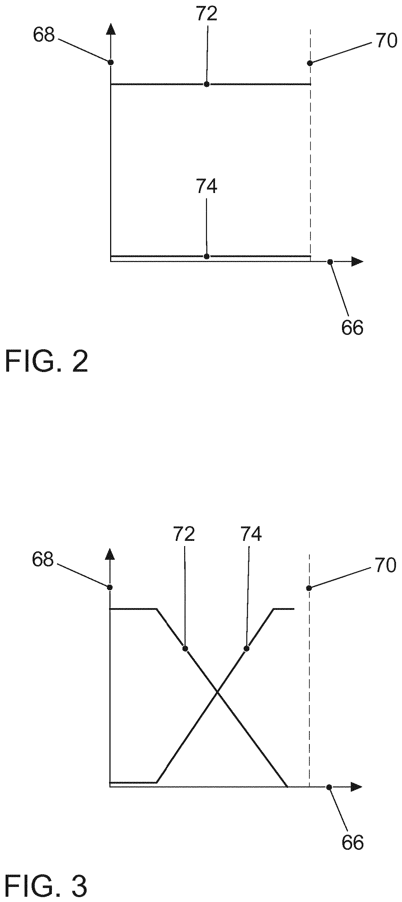

In den Fig. 2 und 3 ist jeweils auf einer horizontalen Achse 66 eine Differenzdruck über den ND-EGR-Filter 48 und auf einer vertikalen Achse 68 eine Abgasrückführungs-Rate (EGR-Rate) aufgetragen. Mit 70 ist ein vorbestimmter Schwellwert für den Differenzdruck 66 gekennzeichnet, bei dem eine Motorbetriebsstörung angezeigt wird. Ein erster Graph 72 veranschaulicht einen Verlauf der ND-EGR-Rate über den Differenzdruck 66 und ein zweiter Graph 74 veranschaulicht den Verlauf der HD-EGR-Rate über den Differenzdruck 66 für einen Betriebszustand der Brennkraftmaschine.

Für einen jeweiligen Betriebszustand der Brennkraftmaschine wird eine Gesamt-Abgasrückführungs-Rate (Gesamt-EGR-Rate) bestimmt, die sich aus einem Anteil der HD-EGR-Rate und einem Anteil einer Niederdruck-Abgasrückführungs-Rate (ND-EGR-Rate) zusammensetzt. Wie aus Fig. 2 ersichtlich, wird im Stand der Technik die jeweilige EGR-Rate 72, 74 konstant gehalten und eine Motorbetriebsstörung angezeigt, wenn der Schwellwert 70 für den Differenzdruck 66 erreicht ist.

Erfindungsgemäß ist es, wie aus Fig. 3 ersichtlich, vorgesehen, die Anteile der ND-EGR-Rate 72 und der HD-EGR-Rate 74 in Abhängigkeit von dem Differenzdruck 66 über den ND-EGR-Filter 48 zu verändern, so dass der Differenzdruck 66 unterhalb des Schwellwerte 70 bleibt. Mit zunehmendem Differenzdruck 66 wird der Anteil der ND-EGR-Rate 72 reduziert und der Anteil der HD-EGR-Rate 74 entsprechend erhöht, so dass die gewünschte Gesamt-EGR-Rate erzielt, jedoch gleichzeitig der Schwellwert 70 für den Differenzdruck 66 nicht überschritten wird. Dies erfolgt derart, dass ggf. die ND-EGR-Rate bis auf null abgesenkt wird, so dass der Schwellwert 70 für den Differenzdruck 66 nicht erreicht und somit keine Motorbetriebsstörung angezeigt werden muss, wie aus Fig. 3 ersichtlich.

Mit anderen Worten erfolgt eine druckverlustabhängige Festlegung der Aufteiilung der EGR-Rate zwischen HD- und ND-EGR, ggf. bis zur kompletten Abschaltung der ND-EGR-Schleife 46.

Bei Druckanstieg über den ND-EGR-Filter 48 wird die ND-EGR-Rate 72 gesenkt und gleichzeitig die HD-EGR-Rate so angehoben, dass ein weitgehend emissionsneutraler Betrieb der Brennkraftmaschine erzielt wird. Auf jeden Fall wird ein Überschreiten von vorbestimmten OBD-Emissionsschwellwerte (OBD - On Board Diagnose) verhindert. Falls erforderlich, wird die ND-EGR-Rate bis auf null abgesenkt und die Brennkraftmaschine wird ausschließlich mit HD-EGR betrieben. Ziel ist es, eine anzeigepflichtige Motorbetriebsstörung zu vermeiden (kein sogen. "MIL ON"). Eine Speicherung des Druckanstiegs im ND-EGR-Filter 48 wird beispielsweise in der Motorsteuerung durchgeführt, um im Rahmen eines ohnehin stattfindenden Werkstattaufenthaltes einen Filterwechsel und evtl. weitere filterbelagsmindernde Maßnahmen durchzuführen.

Das erfindungsgemäße Verfahren ist besonders bevorzugt bei allen turboaufgeladenen Brennkraftmaschinen, wie beispielsweise Diesel oder Ottomotoren, möglich, die über eine ND-EGR mit vorgeschaltetem ND-EGR-Filter 48 sowie eine gekühlte HD-EGR verfügen.

### Bezugszeichenliste

- 10: Motorblock
- 12: Arbeitszylinder
- 14: Verbrennungsluftanlage
- 16: Verbrennungsluft
- 18: Abgasanlage
- 20: Abgas
- 22: Luftfilter
- 24: Verdichter
- 26: Abgasturboladers
- 28: Ladeluftkühler
- 30: Drosselklappe
- 32: Saugrohr
- 34: Abgaskrümmer
- 36: Turbine
- 38: Katalysator
- 40: Relativdrucksensor
- 42: Partikelfilter
- 44: Abgasklappe
- 46: ND-EGR-Schleife
- 48: ND-EGR-Filter
- 50: ND-EGR-Kühler
- 52: ND-EGR-Ventil
- 54: HD-EGR-Schleife
- 56: HD-EGR-Ventil
- 58: HD-EGR-Kühler
- 60: Bypassleitung für den HD-EGR-Kühler 58
- 62: erster Drucksensor
- 64: zweiter Drucksensor
- 66: horizontalen Achse: Differenzdruck über den ND-EGR-Filter 48
- 68: vertikalen Achse: EGR-Rate
- 70: vorbestimmter Schwellwert für den Differenzdruck
- 72: erster Graph: Verlauf der ND-EGR-Rate über den Differenzdruck 66
- 74: zweiter Graph: Verlauf der HD-EGR-Rate über den Differenzdruck 66

## Patentansprüche

1. Verfahren zum Betreiben einer Brennkraftmaschine, wobei eine in einer Abgasanlage (18) der Brennkraftmaschine angeordnete Turbine (36) eines Abgasturboladers (26) von Abgas (20) aus der Brennkraftmaschine abgetrieben wird und ein von der Turbine (36) angetriebener, in einer Verbrennungsluftanlage (14) der Brennkraftmaschine angeordneter Verdichter (24) des Abgasturboladers (26) Verbrennungsluft (16) verdichtet, wobei in einer Hochdruck-Abgasrückführungs-Schleife (HD-EGR-Schleife) (54) Abgas (20) stromauf der Turbine (36) abgeleitet und mit der Verbrennungsluft (16) stromab des Verdichters (24) gemischt wird, wobei in einer Niederdruck-Abgasrückführungs-Schleife (ND-EGR-Schleife) (46) Abgas (20) stromab der Turbine (36) abgeleitet und mit der Verbrennungsluft (16) stromauf des Verdichters (24) gemischt wird, wobei in der ND-EGR-Schleife (46) das Abgas (20) von einem Niederdruck-Abgasrückführungs-Filter (ND-EGR-Filter) (48) gereinigt wird, wobei in Abhängigkeit von einem Betriebszustand der Brennkraftmaschine ein vorbestimmter Wert für eine Gesamtabgasrückführungsrate (Gesamt-EGR-Rate) bestimmt wird, wobei mindestens ein Betriebsparameter der Brennkraftmaschine bestimmt wird, **dadurch gekennzeichnet, dass** als Betriebsparameter der Brennkraftmaschine in der Abgasanlage (18) ein Wert für ein Maß für eine Druckdifferenz (66) zwischen einer ersten vorbestimmten Stelle stromauf des Niederdruck-Abgasrückführungs-Filters (ND-EGR-Filters) (48) und einer zweiten vorbestimmten Stelle stromab des Niederdruck-Abgasrückführungs-Filters (ND-EGR-Filters) (48) bestimmt wird, wobei in Abhängigkeit vom Wert des Maßes der Druckdifferenz (66) ein Anteil einer Niederdruck-Abgasrückführungsrate (ND-EGR-Rate) an der Gesamtabgasrückführungsrate (Gesamt-EGR-Rate) reduziert oder erhöht und ein Anteil einer Hochdruck-Abgasrückführungsrate (HD-EGR-Rate) an der Gesamtabgasrückführungsrate (Gesamt-EGR-Rate) entsprechend erhöht oder reduziert wird, so dass die Gesamtabgasrückführungsrate (Gesamt-EGR-Rate) den vorbestimmten Wert erreicht.

2. Verfahren nach Anspruch 1, **dadurch gekennzeichnet, dass** in Abhängigkeit von dem Betriebsparameter der Brennkraftmaschine der Anteil der ND-EGR-Rate (72) an der Gesamt-EGR-Rate reduziert und der Anteil der HD-EGR-Rate (74) an der Gesamt-EGR-Rate entsprechend erhöht wird, so dass die Gesamt-EGR-Rate den vorbestimmten Wert erreicht.

3. Verfahren nach Anspruch 1, **dadurch gekennzeichnet, dass** in Abhängigkeit von dem Betriebsparameter der Brennkraftmaschine der Anteil der ND-EGR-Rate (72) an der Gesamt-EGR-Rate erhöht und der Anteil der HD-EGR-Rate (74) an der Gesamt-EGR-Rate entsprechend reduziert wird, so dass die Gesamt-EGR-Rate den vorbestimmten Wert erreicht.

4. Verfahren nach mindestens einem der vorhergehenden Ansprüche, **dadurch gekennzeichnet, dass** mit zunehmendem Wert für das Maß für die Druckdifferenz (66) der Anteil der ND-EGR-Rate (72) an der Gesamt-EGR-Rate reduziert und der Anteil der HD-EGR-Rate (74) an der Gesamt-EGR-Rate entsprechend erhöht wird, so dass die Gesamt-EGR-Rate den vorbestimmten Wert erreicht.

5. Verfahren nach Anspruch 4, **dadurch gekennzeichnet, dass** der Anteil der ND-EGR-Rate (72) an der Gesamt-EGR-Rate derart reduziert wird, dass ein Wert für das Maß für die Druckdifferenz (66) unter einem vorbestimmten Wert (70) bleibt, bei dem eine Betriebsstörung angezeigt wird.

6. Verfahren nach mindestens einem der vorhergehenden Ansprüche, **dadurch gekennzeichnet, dass** der Wert für den Wert für das Maß der Druckdifferenz (66) abrufbar gespeichert wird.

7. Verfahren nach mindestens einem der vorhergehenden Ansprüche, **dadurch gekennzeichnet, dass** die ND-EGR-Rate (72) auf null gesetzt wird, wenn der vorbestimmte Wert (70) für den Wert für das Maß der Druckdifferenz (66) nicht mehr durch Reduktion der ND-EGR-Rate (72) um mehr als einen vorbestimmten Wert unterschritten werden kann.

8. Verfahren nach mindestens einem der vorhergehenden Ansprüche, **dadurch gekennzeichnet, dass** in der HD-EGR-Schleife (54) das rückgeführte Abgas gekühlt wird.

9. Steuerungseinrichtung einer Brennkraftmaschine, mit einer Recheneinheit und einer Speichereinheit, **dadurch gekennzeichnet, dass** in der Speichereinheit ein Computerprogramm abgelegt ist, mittels welchem bei wenigstens teilweiser Ausführung durch die Recheneinheit ein Verfahren zum Betreiben einer Brennkraftmaschine gemäß einem der vorhergehenden Ansprüche durchgeführt wird.

## Claims

1. Method for operating an internal combustion engine, wherein a turbine (36) of an exhaust gas turbocharger (26), which is arranged in an exhaust system (18) of the internal combustion engine, is driven by exhaust gas (20) from the internal combustion engine and a compressor (24) of the exhaust gas turbocharger (26), which is driven by the turbine (36) and arranged in a combustion air system (14) of the internal combustion engine, compresses combustion air (16), wherein, in a high-pressure exhaust gas recirculation loop (HP-EGR loop) (54), exhaust gas (20) is diverted upstream of the turbine (36) and mixed with the combustion air (16) downstream of the compressor (24), wherein, in a low-pressure exhaust gas recirculation loop (LP-EGR loop), (46) exhaust gas (20) is diverted downstream of the turbine (36) and mixed with the combustion air (16) upstream of the compressor (24), wherein, in the LP-EGR loop (46), the exhaust gas (20) is cleaned by a low-pressure exhaust gas recirculation filter (LP-EGR filter) (48), wherein a predetermined value for a total exhaust gas recirculation rate (total EGR rate) is determined depending on an operating state of the internal combustion engine, wherein at least one operating parameter of the internal combustion engine is determined,
**characterized in that** as an operating parameter of the internal combustion engine in the exhaust system (18), a value for a measure of a pressure difference (66) between a first predetermined point upstream of the low-pressure exhaust gas recirculation filter (LP-EGR filter) (48) and a second predetermined point downstream of the low-pressure exhaust gas recirculation filter (LP-EGR filter) (48) is determined, wherein, depending on the value of the measure of the pressure difference (66), a proportion of a low-pressure exhaust gas recirculation rate (LP-EGR rate) to the total exhaust gas recirculation rate (total EGR rate) is reduced or increased and a proportion of a high-pressure exhaust gas recirculation rate (HP-EGR rate) to the total exhaust gas recirculation rate (total EGR rate) is increased or reduced accordingly, so that the total exhaust gas recirculation rate (total EGR rate) reaches the predetermined value.

2. Method according to claim 1, **characterized in that** depending on the operating parameters of the internal combustion engine, the proportion of the LP-EGR rate (72) to the total EGR rate is reduced and the proportion of the HP-EGR rate (74) to the total EGR rate is increased accordingly, so that the total EGR rate reaches the predetermined value.

3. Method according to claim 1, **characterized in that** depending on the operating parameters of the internal combustion engine, the proportion of the LP-EGR rate (72) to the total EGR rate is increased and the proportion of the HP-EGR rate (74) to the total EGR rate is reduced accordingly, so that the total EGR rate reaches the predetermined value.

4. Method according to at least one of the preceding claims,
**characterized in that** as the value of the measure of the pressure difference (66) increases, the proportion of the LP-EGR rate (72) to the total EGR rate is reduced and the proportion of the HP-EGR rate (74) to the total EGR rate is increased accordingly, so that the total EGR rate reaches the predetermined value.

5. Method according to claim 4, **characterized in that** the proportion of the LP-EGR rate (72) to the total EGR rate is reduced such that a value for the measure of the pressure difference (66) remains below a predetermined value (70) at which an operating fault is indicated.

6. Method according to at least one of the preceding claims,
**characterized in that** the value for the value for the measure of the pressure difference (66) is stored in a retrievable manner.

7. Method according to at least one of the preceding claims,
**characterized in that** the LP-EGR rate (72) is set to zero when the predetermined value (70) for the value for the measure of the pressure difference (66) can no longer be undershot by reducing the LP-EGR rate (72) by more than a predetermined value.

8. Method according to at least one of the preceding claims,
**characterized in that** the recirculated exhaust gas is cooled in the HP-EGR loop (54).

9. Control device of an internal combustion engine, having a computing unit and a storage unit, **characterized in that** a computer program is stored in the memory unit, by means of which computer program, when it is at least partially executed by the computing unit, a method for operating an internal combustion engine is carried out according to any of the preceding claims.

## Revendications

1. Procédé permettant de faire fonctionner un moteur à combustion interne, dans lequel une turbine (36) d'un turbocompresseur à gaz d'échappement (26), disposée dans un système de gaz d'échappement (18) du moteur à combustion interne, est entraînée par les gaz d'échappement (20) en provenance du moteur à combustion interne, et un compresseur (24) du turbocompresseur à gaz d'échappement (26), entraîné par la turbine (36) et disposé dans un système d'air de combustion (14) du moteur à combustion interne, comprime l'air de combustion (16), dans lequel les gaz d'échappement (20) sont évacués en amont de la turbine (36) dans une boucle de recirculation des gaz d'échappement haute pression (boucle d'EGR haute pression) (54) et sont mélangés à l'air de combustion (16) en aval du compresseur (24), dans lequel, dans une boucle de recirculation des gaz d'échappement basse pression (boucle d'EGR basse pression) (46), les gaz d'échappement (20) sont évacués en aval de la turbine (36) et sont mélangés à l'air de combustion (16) en amont du compresseur (24), dans lequel, dans la boucle d'EGR basse pression (46), les gaz d'échappement (20) sont épurés par un filtre de recirculation des gaz d'échappement basse pression (filtre d'EGR basse pression) (48), dans lequel, en fonction d'un état de fonctionnement du moteur à combustion interne, une valeur prédéterminée pour un taux de recyclage total des gaz d'échappement (taux d'EGR total) est déterminée, dans lequel au moins un paramètre de fonctionnement du moteur à combustion interne est déterminé, **caractérisé en ce que,** comme paramètre de fonctionnement du moteur à combustion interne dans le système de gaz d'échappement (18), une valeur pour une mesure d'une différence de pression (66) entre un premier emplacement prédéterminé en amont du filtre de recirculation des gaz d'échappement basse pression (filtre d'EGR basse pression) (48) et un second emplacement prédéterminé en aval du filtre de recirculation des gaz d'échappement basse pression (filtre d'EGR basse pression) (48) est déterminée, dans lequel, en fonction de la valeur de la mesure de la différence de pression (66), une proportion d'un taux de recirculation des gaz d'échappement basse pression (taux d'EGR basse pression) par rapport au taux de recirculation total des gaz d'échappement (taux d'EGR total) est réduite ou augmentée, et une proportion d'un taux de recirculation des gaz d'échappement haute pression (taux d'EGR haute pression) par rapport au taux de recirculation total des gaz d'échappement (taux d'EGR total) est augmentée ou réduite en conséquence, de sorte que le taux de recirculation total des gaz d'échappement (taux d'EGR total) atteint la valeur prédéterminée.

2. Procédé selon la revendication 1, **caractérisé en ce que,** en fonction du paramètre de fonctionnement du moteur à combustion interne, la proportion du taux d'EGR basse pression (72) par rapport au taux d'EGR total est réduite et la proportion du taux d'EGR haute pression (74) par rapport au taux d'EGR total est augmentée en conséquence, de sorte que le taux d'EGR total atteint la valeur prédéterminée.

3. Procédé selon la revendication 1, **caractérisé en ce que,** en fonction du paramètre de fonctionnement du moteur à combustion interne, la proportion du taux d'EGR basse pression (72) par rapport au taux d'EGR total est augmentée et la proportion du taux d'EGR haute pression (74) par rapport au taux d'EGR total est réduite en conséquence, de sorte que le taux d'EGR total atteint la valeur prédéterminée.

4. Procédé selon au moins l'une des revendications précédentes, **caractérisé en ce que,** lorsque la valeur de la mesure de la différence de pression (66) augmente, la proportion du taux d'EGR basse pression (72) par rapport au taux d'EGR total est réduite et la proportion du taux d'EGR haute pression (74) par rapport au taux d'EGR total est augmentée en conséquence, de sorte que le taux d'EGR total atteint la valeur prédéterminée.

5. Procédé selon la revendication 4, **caractérisé en ce que** la proportion du taux d'EGR basse pression (72) par rapport au taux d'EGR total est réduite de telle sorte qu'une valeur de la mesure de la différence de pression (66) reste inférieure à une valeur prédéterminée (70) à laquelle un dysfonctionnement est indiqué.

6. Procédé selon au moins l'une des revendications précédentes, **caractérisé en ce que** la valeur pour la valeur de la mesure de la différence de pression (66) est stockée de manière à pouvoir être consultée.

7. Procédé selon au moins l'une des revendications précédentes, **caractérisé en ce que** le taux d'EGR basse tension (72) est fixé à zéro lorsque la valeur (70) prédéterminée pour la valeur de la mesure de la différence de pression (66) ne peut plus être inférieure en réduisant le taux d'EGR basse pression (72) de plus d'une valeur prédéterminée.

8. Procédé selon au moins l'une des revendications précédentes, **caractérisé en ce que,** dans la boucle d'EGR haute pression (54), le gaz d'échappement recirculé est refroidi.

9. Dispositif de commande d'un moteur à combustion interne, comportant une unité de calcul et une unité de mémoire, **caractérisé en ce que,** dans l'unité de mémoire, est stocké un programme informatique à l'aide duquel, en cas d'exécution au moins partielle par l'unité de calcul, un procédé permettant de faire fonctionner un moteur à combustion interne selon l'une des revendications précédentes est mis en oeuvre.
